# EUROPÄISCHE PATENTSCHRIFT

(11) **EP 1 592 872 B1**
(45) Veröffentlichungstag und Bekanntmachung des Hinweises auf die Patenterteilung: **13.08.2008**
(21) Anmeldenummer: 04709138.4
(22) Anmeldetag: 07.02.2004
(51) Int. Cl.: F02D 41/02, F02D 41/40, F02B 1/12, F01N 3/08

(54) **VERFAHREN ZUM BETRIEB EINER BRENNKRAFTMASCHINE**
METHOD FOR OPERATING AN INTERNAL COMBUSTION ENGINE
PROCEDE D'EXPLOITATION D'UN MOTEUR A COMBUSTION INTERNE

(30) Priorität: 15.02.2003 DE 10306366
(43) Veröffentlichungstag der Anmeldung: 09.11.2005
(73) Patentinhaber: Daimler AG, 70327 Stuttgart (DE)
(72) Erfinder: ABET, Oliver, 71566 Althütte (DE); HERTWECK, Gernot, 70736 Fellbach (DE); MÜHLEISEN, Thomas, 73110 Hattenhofen (DE); STOTZ, Marco, 70771 Leinfelden-Echterdingen (DE)
(86) Internationale Anmeldenummer: PCT/EP2004/001137
(87) Internationale Veröffentlichungsnummer: WO 2004/072462

(56) Entgegenhaltungen:
- EP-A- 0 732 485
- EP-A- 0 886 050
- EP-A- 0 990 788
- DE-A- 10 029 504
- DE-C- 19 750 226

## Beschreibung

Die Erfindung betrifft ein Verfahren zum Betrieb einer Brennkraftmaschine mit Abgasreinigungsanlage, wobei wechselweise ein Fettbetrieb der Brennkraftmaschine mit fetter Abgaszusammensetzung oder ein Magerbetrieb der Brennkraftmaschine mit magerer Abgaszusammensetzung eingestellt wird und bei dem die während eines Verbrennungszyklus eingebrachte Kraftstoffmenge mittels wenigstens einer Voreinspritzung, wenigstens einer Haupteinspritzung sowie wenigstens einer Nacheinspritzung eingebracht wird.

Die Erfindung betrifft auch eine Brennkraftmaschine mit Abgasreinigungsanlage zur Durchführung des erfindungsgemäßen Verfahrens.

Stickoxide in sauerstoffreichen Verbrennungsabgasen lassen sich sehr gut mit Hilfe von Ammoniak zu Stickstoff reduzieren. Hierbei ist es sinnvoll, den Ammoniak in einer Katalysatoreinheit im Fahrzeug selbst zu erzeugen. Die ammoniakerzeugende Katalysatoreinheit kann dabei beispielsweise durch einen 3-Wege-Katalysator gebildet werden, der bei unterstöchiometrischer Abgaszusammensetzung aus Stickoxiden NOₓ und Wasserstoff H₂ Ammoniak NH₃ synthetisiert. In einem nachgeschalteten Stickoxidreduktions-Katalysator wird der Ammoniak bei unterstöchiometrischer oder fetter Abgaszusammensetzung eingespeichert. Dieser Ammoniak reduziert bei anschließender überstöchiometrischer oder magerer Abgaszusammensetzung im Stickoxidreduktionskatalysator Stickoxide zu Stickstoff. Die Menge an erzeugtem Ammoniak ist abhängig von der Menge an angebotenen Stickoxiden bei unterstöchiometrischer oder fetter Verbrennung.

Als Magerbetrieb wird ein überstöchiometrischer Motorbetrieb bezeichnet, bei dem in der Verbrennung ein Sauerstoffüberschuss, d.h. λ>1, herrscht. Unter Fettbetrieb wird ein unterstöchiometrischer Motorbetrieb verstanden, bei dem in der Verbrennung ein Kraftstoffüberschuss, d.h. λ<1, herrscht. Dementsprechend bezeichnet eine magere Abgaszusammensetzung einen Sauerstoffüberschuss im Abgas und eine fette Abgaszusammensetzung einen Kraftstoffüberschuss im Abgas.

Aus der deutschen Offenlegungsschrift DE 198 20 828 A1 ist eine Abgasreinigungsanlage bekannt, die bei fetter Abgaszusammensetzung mittels einer ersten Katalysatoreinheit Ammoniak aus im Abgas enthaltenen Stickoxiden und Wasserstoff erzeugt und den erzeugten Ammoniak mittels einer zweiten Katalysatoreinheit speichert. Bei magerer Abgaszusammensetzung werden im Abgas enthaltene Stickoxide unter Einsatz des zwischengespeicherten Ammoniaks als Reduktionsmittel einer Reduktionsreaktion unterzogen. Damit auch bei fetter Abgaszusammensetzung ausreichend Stickoxide im Abgas enthalten sind, um eine nennenswerte Menge an Ammoniak zu synthetisieren, ist der ersten Katalysatoreinheit, die bei fetter Abgaszusammensetzung zur Erzeugung von Ammoniak vorgesehen ist, eine dritte Katalysatoreinheit vorgeschaltet, die bei magerer Abgaszusammensetzung im Abgas enthaltene Stickoxide zwischenspeichert und bei fetter Abgaszusammensetzung die zuvor gespeicherten Stickoxide wieder freisetzt.

Aus der deutschen Patentschrift DE 197 50 226 C1 ist eine Motorregelung für einen Dieselmotor mit Abgasreinigungsanlage bekannt, die mit einer Adsorptionseinrichtung für Stickoxide NOₓ versehen ist, die bei magerer Abgaszusammensetzung Stickoxide adsorbiert. Zur Regeneration des Absorbersystems ist zeitweise eine fette Abgaszusammensetzung erforderlich, bei der die Abgase eine reduzierende Atmosphäre aufweisen. Zur Einstellung einer fetten bzw. mageren Abgaszusammensetzung erfolgt eine Einspritzung einer Kraftstoffmenge durch eine Voreinspritzung, eine Haupteinspritzung sowie eine Kraftstoffnacheinspritzung. Die Kraftstoffnacheinspritzung wird im wesentlichen nur noch verdampft und aufbereitet, aber nur zu einem geringen Anteil verbrannt, so dass eine stark erhöhte Emission an unverbrannten Kohlenwasserstoffen HC und Kohlenmonoxid CO erfolgt. Wenn die Adsorptionseinrichtung bei fetter Abgaszusammensetzung die gespeicherten Stickoxide freisetzt, dienen die Reaktionsprodukte Kohlenwasserstoff HC und Kohlenmonoxid CO auf den Adsorberflächen zur Umsetzung von Stickoxiden zu Stickstoff N₂.

Aus der deutschen Offenlegungsschrift DE 100 29 504 A1 ist ein mehrstufiges Brennverfahren für Dieselmotoren bekannt, bei dem ein Luftverhältnis λ des zu verbrennenden Kraftstoffes und der zugeführten Verbrennungsluft von einer Steuereinheit nach vorgegebenen Werten eingestellt wird. Eine Steuereinheit kann von einem normalen Magerbetrieb auf einen zeitweisen Fettbetrieb umgeschaltet werden. Im Fettbetrieb ist eine zeitlich von der Hauptspritzung abgesetzte Nacheinspritzung von Kraftstoff sowie gegebenenfalls eine beliebige Anzahl an Voreinspritzungen vorgesehen. Mittels einer weiteren zeitlich abgesetzten Nacheinspritzung können je nach Bedarf überstöchiometrische oder unterstöchiometrische Luftverhältnisse geschaffen werden. Das Brennverfahren ist geeignet, im Fettbetrieb für die Regeneration von NOₓ-Adsorbersystemen geeignete Abgaszusammensetzungen und Temperaturen bereitzustellen.

Aus EP 0 990 788 A2 ist ein weiteres Abgasreinigungssystem mit einem NOₓ-Absorber bekannt, das eine Voreinspritzung, eine haupteinspritzung und eine Nacheinspritzung durchführt.

Mit der Erfindung soll ein Verfahren zum Betrieb einer Brennkraftmaschine sowie eine Brennkraftmaschine angegeben werden, bei denen durch Beeinflussung der Verbrennung von Kraftstoff in der Brennkraftmaschine auch bei fetter Abgaszusammensetzung eine für die Synthese nennenswerter Mengen von Ammoniak ausreichende Menge an Stickoxiden bereitgestellt wird.

Erfindungsgemäß ist hierzu ein Verfahren zum Betrieb einer Brennkraftmaschine mit Abgasreinigungsanlage vorgesehen, wobei wechselweise ein Fettbetrieb der Brennkraftmaschine mit fetter Abgaszusammensetzung oder ein Magerbetrieb der Brennkraftmaschine mit magerer Abgaszusammensetzung eingestellt wird und bei dem die während eines Verbrennungszyklus der Brennkraftmaschine eingebrachte Kraftstoffmenge mittels wenigstens einer Voreinspritzung, wenigstens einer Haupteinspritzung sowie wenigstens einer Nacheinspritzung eingebracht wird, bei dem im Fettbetrieb zu einem frühen Zeitpunkt eine Voreinspritzung von Kraftstoff erfolgt, um im Brennraum ein vorhomogenisiertes Gemisch zu erzielen, die mit der Voreinspritzung eingespritzte Kraftstoffmenge so bemessen und mittels Ansaugluftdrosselung ein Brennraumdruck so abgesenkt wird, dass im Brennraum ein zunächst nicht zündfähiges Gemisch vorliegt, dem vorhomogenisierten Gemisch im Brennraum eine Haupteinspritzung zugesetzt wird, um die Zündfähigkeit des im Brennraum vorliegenden Gemischs zu verbessern, eine Verbrennung der wenigstens einen Voreinspritzung und der wenigstens einen Haupteinspritzung unter Sauerstoffüberschuss erfolgt und die Einstellung einer fetten Abgaszusammensetzung mittels der wenigstens einen Nacheinspritzung erfolgt.

Durch die homogenisierte Kraftstoffaufbereitung und die Verbrennung der nahezu vollständig homogenen Zylinderladung unter Sauerstoffüberschuss, beispielsweise bei λ unter 1,6 entstehen hohe Temperaturen und somit viel Stickoxid bei signifikant niedriger Abgasschwärzung. Das unterstöchiometrische Abgas wird durch eine abgesetzte Nacheinspritzung erreicht, die teilweise an der Verbrennung teilnimmt. Dadurch stehen auch im Fettbetrieb ausreichend Stickoxide zur Verfügung, um eine nennenswerte Menge an Ammoniak zu synthetisieren. Ein zusätzlicher, dem ammoniakerzeugenden Katalysator vorgeschalteter NOₓ-Adsorber kann dadurch kleiner ausgeführt werden oder gegebenenfalls sogar ganz entfallen. Indem auch im Fettbetrieb eine nennenswerte Menge an Stickoxid bereitgestellt wird, kann die zur Regeneration des Katalysators erforderliche Zeitdauer des Fettbetriebs verringert werden, wodurch der Kraftstoffverbrauch sinkt. Mittels des erfindungsgemäßen Brennverfahrens können auch im Fettbetrieb hohe Abgastemperaturen erzeugt werden, wie sie in einem ammoniakerzeugenden Katalysator zur Synthese von Ammoniak aus Stickstoff und Wasserstoff benötigt werden.

Die Ansaugluftdrosselung erfolgt in einer Weise, dass bei der Hauptverbrennung das Luftverhältnis im Brennraum unterhalb eines Wertes von 2,0 liegt. Durch die Vorhomogenisierung des Kraftstoff-Luftgemisches aufgrund der bei der Erfindung gewählte Einspritzstrategie findet die Hauptverbrennung bei kleinen Luftverhältnissen und hoher Brennraumtemperatur statt, so dass eine hohe Stickoxidkonzentration im Brennraum entsteht. Die maximale Stickoxidkonzentration wird dabei bei einem Luftverhältnis von 1,1 bis 1,3 erzielt. Eine vorzeitige bzw. unkontrollierte Selbstzündung der Zylinderladung vor dem oberen Totpunkt wird dabei durch die vorgenommene Ansaugluftdrosselung verhindert, die zu einer Verringerung des Brennraumdruckes führt. Die vorhomogenisierte Zylinderladung wird somit erst durch die gezielte Haupteinspritzung im Bereich des oberen Totpunkts gezündet und verbrennt bei hoher Temperatur. Wie bereits ausgeführt wurde, resultiert bei dem gewählten Luftverhältnis hieraus eine hohe Stickoxidemission bei gleichzeitig niedriger Abgasschwärzung.

Vorteilhafterweise erfolgt im Fettbetrieb keine Abgasrückführung.

In Weiterbildung der Erfindung wird eine steuerbare Einlassdrallströmung erzeugt.

Mittels einer steuerbaren Einlassdrallströmung wird die Vorhomogenisierung des Kraftstoff-Luft-Gemischs im Brennraum sowie die Ansaugluftdrosselung unterstützt.

In Weiterbildung der Erfindung erfolgt die Ansaugluftdrosselung mittels wenigstens einer Drosselklappe und/oder einer variablen Einlassventilsteuerung.

Beispielsweise kann jedem Zylinder eine Drosselklappe zugeordnet sein, die dann nach der Abgasrückführeinrichtung angeordnet sind. Anstelle einer Drossel für jeden Zylinder können auch Drosseln für je eine Zylinderbank oder mehrere Zylinder vorgesehen sein. Anstelle oder zusätzlich zu Drosselklappen kann auch eine variable Einlassventilsteuerung vorgesehen sein. Alternativ kann die Ansaugluftdrosseleinrichtung auch in Strömungsrichtung vor der Abgasrückführeinrichtung angeordnet sein. Sämtliche Mittel zur Ansaugluftdrosselung werden von einem hilfskraftbetätigten Stellantrieb in Abhängigkeit von Signalen einer elektronischen Motorsteuerung betätigt.

In Weiterbildung der Erfindung wird eine steuerbare Einlass-Drall-Strömung erzeugt.

Die Verwehung des in der Kompressionsphase eingespritzten Kraftstoffes wird durch eine hohe Drallströmung begünstigt und verstärkt den Effekt, dass das vorhomogenisierte Gemisch nicht unkontrolliert oder vorzeitig zündet.

In Weiterbildung der Erfindung erfolgt eine Verbrennung der wenigstens einen Voreinspritzung und der wenigstens einen Haupteinspritzung bei einem λ-Wert von weniger als 2 und vorzugsweise zwischen 1,1 und 1,3.

Auf diese Weise entsteht auch im Fettbetrieb eine ausreichende Menge Stickoxid für die Amoniaksynthese.

In Weiterbildung der Erfindung wird die wenigstens eine Haupteinspritzung im Bereich des oberen Totpunkts in den Brennraum eingebracht.

Mit der wenigstens einen Haupteinspritzung wird die Zündung des im Brennraum befindlichen Kraftstoff-Luftgemisches ausgelöst bzw. dessen Zündfähigkeit wenigstens erheblich verbessert. Die Haupteinspritzung kann dabei in einem Bereich von etwa 10° vor OT bis 10° nach OT erfolgen, vorzugsweise in einem Bereich von 4° vor OT bis 4° nach OT.

In Weiterbildung der Erfindung wird die Voreinspritzung noch vor dem unteren Totpunkt in den Brennraum eingebracht.

Auf diese Weise kann die Vorhomogenisierung unterstützt werden. Eine Ölverdünnung wird dabei durch Einspritzung im Sitzdrosselbereich vermieden.

Das der Erfindung zugrundeliegende Problem wird auch durch eine Brennkraftmaschine zur Durchführung des erfindungsgemä-βen Verfahrens mit einer steuerbaren Einspritzanlage gelöst, bei der Mittel zur Vorhomogenisierung der mittels wenigstens einen Voreinspritzung eingebrachten Kraftstoffmenge und Mittel zur Ansaugluftdrosselung vorgesehen sind.

Weitere Merkmale und Vorteile der Erfindung ergeben sich aus den Ansprüchen und der nachfolgenden Beschreibung einer bevorzugten Ausführungsform der Erfindung anhand der Zeichnungen. In den Zeichnungen zeigen:
- Fig. 1: einen erfindungsgemäßen Dieselmotor mit Abgasreinigungsanlage zur Durchführung des erfindungsgemäßen Verfahrens,
- Fig. 2: ein den Verlauf des Energieinhalts des Brennraums darstellendes Diagramm,
- Fig. 3: ein Diagramm zum Zylinderdruck mit und ohne Ansaugluftdrosselung und
- Fig. 4: eine schematische Darstellung des erfindungsgemäßen Verfahrens über dem Kurbelwellenwinkel.

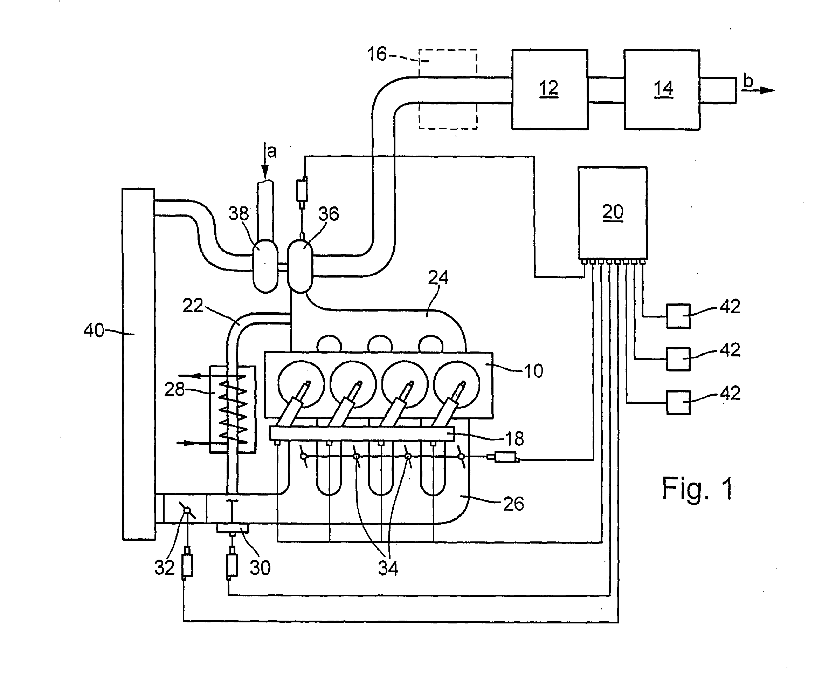

Die schematische Darstellung der Figur 1 zeigt einen Dieselmotor 10, der mit einer Abgasreinigungsanlage mit einer ersten Katalysatoreinheit 12 versehen ist, die bei fetter Abgaszusammensetzung Ammoniak aus entsprechenden Abgasbestandteilen erzeugt. Stromabwärts der ersten Katalysatoreinheit 12 ist eine zweite Katalysatoreinheit 14 vorgesehen, die bei fetter Abgaszusammensetzung von der ersten Katalysatoreinheit 12 erzeugten Ammoniak adsorbiert. Bei magerer Abgaszusammensetzung setzt die zweite Katalysatoreinheit 14 den Ammoniak wieder frei, der dann als Reduktionsmittel für eine Reduktionsreaktion dient, mit der im Abgas enthaltene Stickoxide unter gleichzeitiger Oxidation des Ammoniaks in Stickstoff umgewandelt werden. Sobald im Magerbetrieb die zwischengespeicherte Ammoniakmenge in der zweiten Katalysatoreinheit 14 erschöpft ist, wird auf Fettbetrieb umgeschaltet.

Stromaufwärts der ersten Katalysatoreinheit 12 ist gestrichelt eine dritte Katalysatoreinheit 16 angedeutet, die optional vorgesehen sein kann und dafür vorgesehen ist, bei magerer Abgaszusammensetzung im Abgas enthaltene Stickoxide zwischenzuspeichern und bei fetter Abgaszusammensetzung zuvor zwischengespeicherte Stickoxide wieder freizusetzen. Die dritte Katalysatoreinheit 16 kann vorgesehen sein, um im Fettbetrieb die Erzeugung von Ammoniak mittels der ersten Katalysatoreinheit 12 zu beschleunigen.

Durch die Erfindung kann auch bei Fettbetrieb des Dieselmotors 10 mittels der Beeinflussung der Kraftstoffverbrennung im Dieselmotor 10 selbst eine erhöhte Menge an Stickoxiden im Abgas bereitgestellt werden. Dadurch wird die Erzeugung von Ammoniak in der ersten Katalysatoreinheit 12 beschleunigt. Die zur Erzeugung des Ammoniaks notwendigen Fettbetriebsphasen können dadurch gegenüber konventionellen Verfahren verkürzt werden.

Der Dieselmotor 10 weist eine Einspritzanlage 18 auf, die durch eine zentrale Motorsteuerung 20 angesteuert wird. Mittels der zentralen Motorsteuerung 20 kann eine für die Einspritzung in einen Brennraum des Dieselmotors 10 während eines Verbrennungszyklus vorgesehene Gesamteinspritzmenge in wenigstens eine Voreinspritzung, wenigstens eine Haupteinspritzung und wenigstens eine Nacheinspritzung unterteilt werden.

Der Dieselmotor 10 ist mit einer Abgasrückführleitung 22 versehen, die einen Auspuffkrümmer 24 mit einem Ansaugkrümmer 26 verbindet und über einen Abgasrückführ-Wärmetauscher 28 führt. Die Abgasrückführleitung 22 kann mittels eines im Ansaugweg angeordneten Abgasrückführ-Ventils 30 unter Steuerung der zentralen Motorsteuerung 20 verschlossen und geöffnet werden. Bei dem erfindungsgemäßen Verfahren wird im Fettbetrieb die Abgasrückführleitung 22 mittels des Abgasrückführ-Ventils 30 verschlossen.

Darüber hinaus ist der Dieselmotor 10 mit einer Drosselklappe 32 im Ansaugweg stromaufwärts des Abgasrückführ-Ventils 30 versehen, die ebenfalls durch die zentrale Motorsteuerung 20 angesteuert werden kann. Außerdem befinden sich im Ansaugweg zu jedem einzelnen Brennraum des Dieselmotors 10 Einzeldrosselklappen 34, die ebenfalls durch die zentrale Motorsteuerung 20 eingestellt werden können.

Die Abgase des Dieselmotors 10 gelangen ausgehend vom Abgaskrümmer 24 zunächst zu einer Abgasturbine 36, deren Geometrie über das Steuergerät 20 verändert werden kann. Die Abgasturbine 36 treibt einen Verdichter 38, der Frischluft an der mit a bezeichneten Stelle ansaugt und in den Ansaugweg und somit den Ansaugkrümmer 26 des Dieselmotors 10 drückt. Zwischen Verdichter 38 und Ansaugkrümmer 26 ist ein Ladeluftkühler 40 vorgesehen. Stromabwärts der zweiten Katalysatoreinheit 14 verlassen die Abgase in der mit b bezeichneten Richtung die Abgasreinigungsanlage.

Informationen über aktuelle Werte von Betriebsparametern des Dieselmotors 10 erhält die zentrale Motorsteuerung 20 über lediglich schematisch und beispielhaft dargestellte Sensoren 42. Mittels der Sensoren 42 wird beispielsweise eine Abgaszusammensetzung stromabwärts der zweiten Katalysatoreinheit 14 erfasst, um feststellen zu können, ob der in der zweiten Katalysatoreinheit 14 gespeicherte Ammoniak erschöpft ist und infolgedessen vom Magerbetrieb auf einen Fettbetrieb des Dieselmotors 10 umgeschaltet werden muss. Darüber hinaus stellen die Sensoren 42 der zentralen Motorsteuerung 20 Informationen wie Ladedruck, Ladelufttemperatur, Kurbelwellenwinkel, Abgastemperatur und dergleichen zur Verfügung.

In der zentralen Motorsteuerung 20 sind sowohl für einen Fettbetrieb als auch für einen Magerbetrieb des Dieselmotors 10 Kennfelder hinterlegt, über die eine Regelung des Dieselmotors 10 erfolgt.

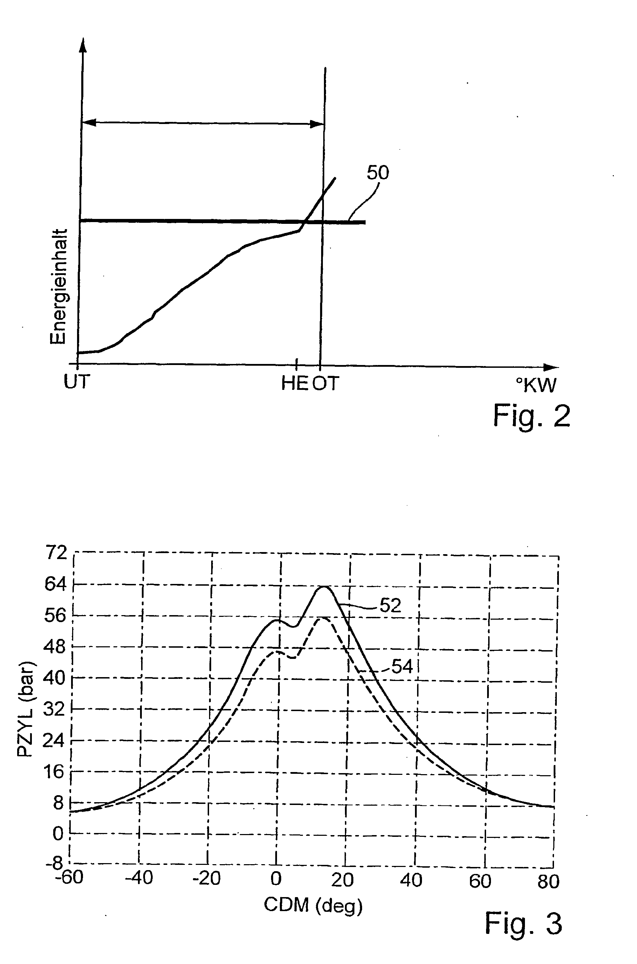

In der Darstellung der Fig. 2 ist schematisch der Verlauf des Energieinhalts im Brennraum während der Kompressionsphase dargestellt. Eine waagrechte Linie 50 deutet den Energiebedarf an, der zur Selbstzündung des im Brennraum befindlichen homogenen Gemisches erforderlich ist. Im Verlauf der Kompressionsphase steigt der Energieinhalt im Brennraum durch die aus der Kompression stammende Energiezufuhr an, bleibt jedoch unterhalb der Schwelle 50. Die mittels wenigstens einer Voreinspritzung eingebrachte Kraftstoffmenge wird dadurch zunächst nicht entzündet. Vorzeitige bzw. unkontrollierte Selbstzündungen werden dabei durch die Homogenisierung der mittels der Voreinspritzung eingebrachten Kraftstoffmenge sowie den durch eine Ansaugluftdrosselung verminderten Brennraumdruck sichergestellt. Erst zu einem Zeitpunkt HE, zu dem eine Haupteinspritzung als Zündhilfe in den Brennraum eingebracht wird, steigt der Energieinhalt über die Schwelle 50, so dass eine Selbstzündung erfolgen kann. Mit der zum Zeitpunkt HE eingebrachten Haupteinspritzung wird die Zündfähigkeit des Gemisches im Brennraum dadurch verbessert und praktisch erfolgt mittels der Haupteinspritzung die Zündung des Gemisches im Brennraum.

In der Darstellung der Fig. 3 ist ein Zylinderdruck über Grad kurbelwellenwinkel aufgetragen. Die durchgezogene Linie repräsentiert den Zylinderdruck im ungedrosselten dieselmotorischen Betrieb, wohingegen die gestrichelt aufgetragene Linie den Zylinderdruck im gedrosselten dieselmotorischen Betrieb, das bedeutet mit Ansaugluftdrosselung, repräsentiert. Es ist deutlich zu erkennen, dass eine Drosselung im Ansaugsystem zu einem reduzierten Zylinderdruck in der Kompressionsphase führt. Dadurch kann die mittels der Voreinspritzung eingebrachte Kraftstoffmenge angehoben werden, so dass eine homogene Verbrennung bei möglichst kleinem λ stattfinden kann.

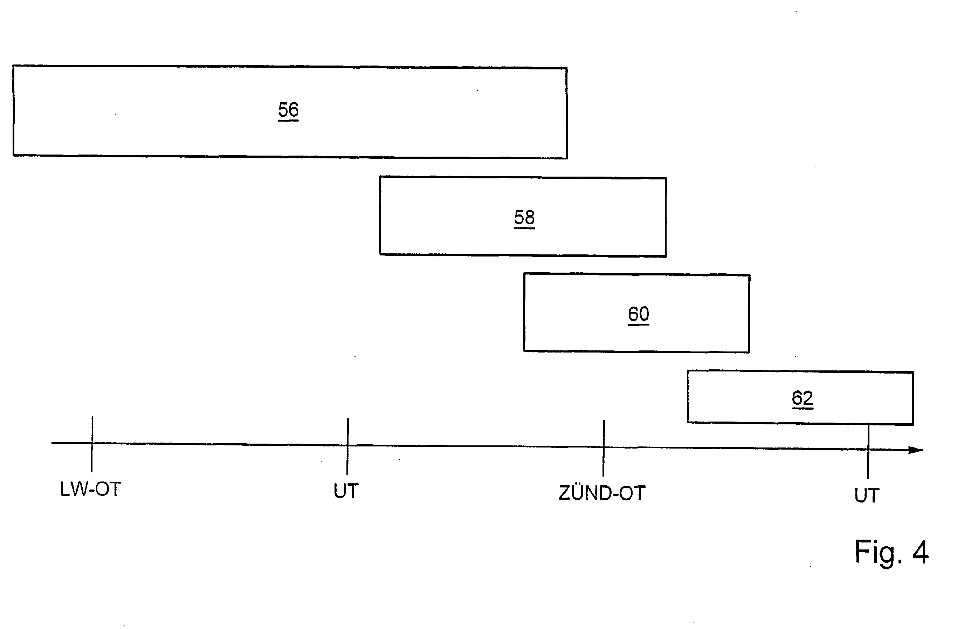

Die Darstellung der Fig. 4 verdeutlicht das erfindungsgemäße Verfahren und speziell die bei der Erfindung gewählte Einspritzstrategie zur Vorhomogenisierung des im Brennraum befindlichen Kraftstoff-Luft-Gemisches.

Mit der Bezugsziffer 56 sind Voreinspritzungen angedeutet, die zur Homogenisierung der Kraftstoffzylinderladung dienen. Durch diese Voreinspritzungen 56 erfolgt keine Wärmefreisetzung im Brennraum. Die Kraftstoffeinbringung kann durch eine oder mehrere Voreinspritzungen erfolgen. Wie der Fig. 4 zu entnehmen ist, können die Voreinspritzungen bereits sehr früh und gegebenenfalls noch vor dem oberen Ladungswechsel-Totpunkt, LW-OT, erfolgen. Voreinspritzungen können auch vor dem unteren Totpunkt und somit noch vor Beginn der Kompressionsphase und bis kurz vor den oberen Zündtotpunkt, ZÜND-OT, erfolgen. Werden die Voreinspritzungen im Sitzdrosselbereich, eventuell im Sitzbereich der Einlass- und/oder Auslassventile eingebracht, ist keine Ölverdünnung durch die frühe Voreinspritzung zu befürchten. Das durch die Voreinspritzungen 56 eingebrachte Gemisch ist nicht zur Selbstzündung während der Kompression fähig und benötigt somit eine sogenannte Zündhilfe oder Wärmefreisetzung in Form einer Haupteinspritzung. Wie bereits ausgeführt wurde, werden bei dem erfindungsgemäßen Verfahren Maßnahmen zur Ansaugluftdrosselung getroffen, die zu einer Reduzierung des Zylinderdrucks führen. Aufgrund des reduzierten Zylindrdruckes können große Kraftstoffmengen eingespritzt werden, ohne eine Selbstzündung hervorzurufen.

Mit der Bezugsziffer 58 sind optionale Voreinspritzungen zur Wärmefreisetzung bezeichnet. Diese Voreinspritzungen 58 dienen zur Verbesserung der Zündbedingungen, das homogenisierte Gemisch wird dabei aber noch nicht entzündet. Die optionalen Voreinspritzungen 58 können nach dem unteren Totpunkt und auch noch nach dem oberen Zündtotpunkt eingebracht werden.

Mit der Bezugsziffer 60 ist eine oder mehrere Haupteinspritzungen bezeichnet, die als Zündhilfe für das homogenisierte Gemisch dienen. Vorteilhafterweise wird mittels der Haupteinspritzung 60 eine zusätzlich Lastregulierung der Brennkraftmaschine erreicht. Wie in der Fig. 2 angedeutet wurde, erfolgt kurz nach Einbringen der Haupteinspritzung 60 die Selbstzündung des Gemisches im Brennraum. Die eine oder mehreren Haupteinspritzungen 60 werden daher im Bereich des oberen Zündtotpunkts eingebracht, beispielsweise 1°KW vor ZÜND-OT oder 4° KW vor OT.

Das durch die Voreinspritzungen 56, gegebenenfalls die Voreinspritzungen 58, und die Haupteinspritzungen 60 gebildete Gemisch verbrennt unter Sauerstoffüberschuss im Brennraum, um die Menge an bei der Verbrennung erzeugten Stickoxiden hochzuhalten und um hohe Abgastemperaturen bereitzustellen. Da für die Bildung von Ammoniak aber fettes Abgas mit Kraftstoffüberschuss benötigt wird, werden bei dem erfindungsgemä-βen Verfahren eine oder mehrere Nacheinspritzungen 62 zur Einstellung eines Luftverhältnisses von λ>1, entsprechend einer fetten Abgaszusammensetzung, eingebracht. Die Nacheinspritzungen 62 können im Brennraum noch verbrannt werden und zur Motorlast beitragen. Die wenigstens teilweise Verbrennung bzw. Umsetzung der Nacheinspritzmenge 62 führt zur Bildung von ausreichenden Mengen Wasserstoff im Brennraum, die beispielsweise zur Ammoniaksynthese benötigt werden. Die Nacheinspritzungen 62 erfolgen in jedem Fall nach dem oberen Zündtotpunkt und können aber auch noch nach dem unteren Totpunkt eingebracht werden. Beispielsweise erfolgen die zusätzlichen Nacheinspritzungen 62 bei 43° KW nach OT oder 60° KW nach OT.

Bei dem erfindungsgemäßen Brennverfahren erfolgt die Verbrennung ohne Abgasrückführung und eine Ansaugluftdrosselung wird mittels einer Drosselklappe oder einer variablen Einlassventilsteuerung durchgeführt. Dadurch kann ein kleines Luftverhältnis auch ohne Abgasrückführung erreicht werden. Zusätzlich kann eine große Kraftstoffmenge zur Vorhomogenisierung eingespritzt werden, da aufgrund der Ansaugluftdrosselung der Zylinderdruck in der Kompressionsphase verringert ist. Eine steuerbare Einlassdrallströmung unterstützt die Homogenisierung, führt zu einer weiteren Anhebung der Stickoxidkonzentration in der Hauptverbrennung und senkt zusätzlich den Luftmassenstrom, so dass die Absenkung des Luftverhältnisses unterstützt wird. Die Voreinspritzmenge und die Haupteinspritzmenge werden durch den Motorbetrieb ohne Abgasrückführung mit Sauerstoffüberschuss im Brennraum umgesetzt. Dies ermöglicht eine deutlich höhere NO-Bildung im Brennraum als bei normaler Verbrennung mit Abgasrückführung. Zusätzlich wird die Stickoxidkonzentration im Brennraum durch die homogene Verbrennung bei geringem Luftverhältnis deutlich erhöht. Die Anhebung des Einlasskanaldralls begünstigt zusätzlich die Stickoxidbildung, insbesondere des Kraftstoffanteils der Haupteinspritzung oder des sogenannten Zündstrahls, der im Bereich des oberen Totpunkts eingespritzt wird.

Die wenigstens teilweise mitverbrennende und anschließend eingebrachte Nacheinspritzmenge sorgt bei dem erfindungsgemä-βen Brennverfahren für den Anteil an Wasserstoffmolekülen im Abgas, der beispielsweise für die Ammoniaksynthese erforderlich ist'. Gleichzeitig kann mittels der Nacheinspritzungen die für die Ammoniaksynthese erforderliche Unterstöchiometrie gezielt eingestellt werden. Sowohl Fettbetrieb als auch Magerbetrieb der erfindungsgemäßen Brennkraftmaschine werden über in einer Motorsteuerung hinterlegte Kennfelder gesteuert.

## Patentansprüche

1. Verfahren zum Betrieb einer Brennkraftmaschine mit Abgasreinigungsanlage, wobei wechselweise ein Fettbetrieb der Brennkraftmaschine mit fetter Abgaszusammensetzung oder ein Magerbetrieb der Brennkraftmaschine mit magerer Abgaszusammensetzung eingestellt wird und bei dem die während eines Verbrennungszyklus der Brennkraftmaschine eingebrachte Kraftstoffmenge mittels wenigstens einer Voreinspritzung, wenigstens einer Haupteinspritzung sowie wenigstens einer Nacheinspritzung eingebracht wird,
**dadurch gekennzeichnet , dass**
im Fettbetrieb zu einem frühen Zeitpunkt eine Voreinspritzung von Kraftstoff erfolgt, um im Brennraum ein vorhomogenisiertes Gemisch zu erzielen,
die mit der Voreinspritzung eingespritzte Kraftstoffmenge so bemessen und mittels Ansaugluftdrosselung ein Brennraumdruck so abgesenkt wird, dass im Brennraum ein zunächst nicht zündfähiges Gemisch vorliegt, dem vorhomogenisierten Gemisch im Brennraum eine Haupteinspritzung zugesetzt wird, um die Zündfähigkeit des im Brennraum vorliegenden Gemischs zu verbessern, eine Verbrennung der wenigstens einen Voreinspritzung und der wenigstens einen Haupteinspritzung unter Sauerstoffüberschuss erfolgt und die Einstellung einer fetten Abgaszusammensetzung mittels der wenigstens einen Nacheinspritzung erfolgt.

2. Verfahren zum Betrieb einer Brennkraftmaschine nach Anspruch 1,
**dadurch gekennzeichnet , dass**
im Fettbetrieb keine Abgasrückführung erfolgt.

3. Verfahren zum Betrieb einer Brennkraftmaschine nach Anspruch 1,
**dadurch gekennzeichnet , dass**
eine steuerbare Einlass-Drall-Strömung erzeugt wird.

4. Verfahren zum Betrieb einer Brennkraftmaschine nach einem der vorstehenden Ansprüche,
**dadurch gekennzeichnet , dass**
die Ansaugluftdrosselung mittels wenigstens einer Drosselklappe und/oder einer variablen Einlassventilsteuerung erfolgt.

5. Verfahren zum Betrieb einer Brennkraftmaschine nach einem der vorstehenden Ansprüche,
**dadurch gekennzeichnet , dass**
eine Verbrennung der wenigstens einen Voreinspritzung und der wenigstens einen Haupteinspritzung bei einem Lambda-Wert von weniger als 2 und vorzugsweise zwischen 1,1 und 1,3 erfolgt.

6. Verfahren zum Betrieb einer Brennkraftmaschine nach einem der vorstehenden Ansprüche,
**dadurch gekennzeichnet , dass**
die wenigstens eine Haupteinspritzung im Bereich des oberen Totpunkts in den Brennraum eingebracht wird.

7. Verfahren zum Betrieb einer Brennkraftmaschine nach einem der vorstehenden Ansprüche,
**dadurch gekennzeichnet , dass**
die Voreinspritzung noch vor dem unteren Totpunkt in den Brennraum eingebracht wird.

8. Brennkraftmaschine mit Abgasreinigungsanlage zur Durchführung des Verfahrens nach einem der vorstehenden Ansprüche, mit einer Einspritzanlage mit Mitteln zum Einbringen einer Kraftstoffmenge durch wenigstens eine Voreinspritzung, wenigstens eine Haupteinspritzung und wenigstens eine Nacheinspritzung, wobei Einspritzzeitpunkt und Einspritzmenge mittels eines Steuergeräts innerhalb vordefinierter Grenzen einstellbar sind, und wobei Mittel zur Vorhomogenisierung der mittels der wenigstens einen Voreinspritzung eingebrachten Kraftstoffmenge und Mittel zur Ansaugluftdrosselung vorgesehen sind.

## Claims

1. A process for operating an internal combustion engine with an exhaust emission control system, it being possible to set either a rich mix operating mode with a rich exhaust gas composition or alternatively a lean mix operating mode with a lean exhaust gas composition and in which the quantity of fuel introduced during a combustion cycle is introduced by means of at least one pre-injection, at least one principal injection and at least one post-injection,
**characterised in that**
in rich mix mode the pre-injection of fuel takes place early in order to achieve a pre-homogenised mixture in the combustion chamber, the quantity of fuel injected with the pre-injection is measured in such a manner and a combustion chamber pressure is reduced by means of intake air throttling in such a manner that the mixture present in the combustion chamber is not initially ignitable, a principal injection is added to the pre-homogenised mixture in the combustion chamber in order to improve the ignitability of the mixture in the combustion chamber, the at least one pre-injection and the at least one principal injection are burned with excess oxygen and a rich exhaust gas composition is set by means of the at least one post-injection.

2. A process for operating an internal combustion engine in accordance with claim 1,
**characterised in that**
no exhaust gas recirculation takes place in rich mix mode.

3. A process for operating an internal combustion engine in accordance with claim 1,
**characterised in that**
a controllable inlet swirl flow is generated.

4. A process for operating an internal combustion engine in accordance with one of the preceding claims,
**characterised in that**
the intake air is throttled by means of at least one throttle valve and/or a variable inlet valve control system.

5. A process for operating an internal combustion engine in accordance with one of the preceding claims,
**characterised in that**
combustion of the at least one pre-injection and the at least one principal injection takes place at a lambda value of less than 2 and preferably between 1.1 and 1.3.

6. A process for operating an internal combustion engine in accordance with one of the preceding claims,
**characterised in that**
the at least one principal injection is introduced into the combustion chamber in the region of top dead centre.

7. A process for operating an internal combustion engine in accordance with one of the preceding claims,
**characterised in that**
the pre-injection is introduced into the combustion chamber before bottom dead centre.

8. An internal combustion engine with an exhaust emission control
system for carrying out the process in accordance with one of the preceding claims having an injection system with means for introducing a quantity of fuel in the form of at least one pre-injection, at least one principal injection and at least one post-injection, it being possible to adjust the injection point and the injection quantity within predefined limits by means of a control device, and means for pre-homogenising the quantity of fuel introduced by means of the at least one pre-injection and means for intake air throttling being provided.

## Revendications

1. Procédé pour le fonctionnement d'un moteur à combustion interne avec installation de purification de gaz d'échappement, dans lequel on établit de façon variable un fonctionnement riche du moteur à combustion interne avec composition riche des gaz d'échappement ou un fonctionnement maigre du moteur à combustion interne avec composition maigre des gaz d'échappement, et dans lequel la quantité de carburant introduite pendant un cycle de combustion du moteur à combustion interne est introduite au moyen d'au moins une injection préliminaire, d'au moins une injection principale, et d'au moins une injection postérieure,
**caractérisé en ce que**
dans le fonctionnement riche, à un instant précoce a lieu une injection préliminaire de carburant pour atteindre dans la chambre de combustion un mélange préalablement homogénéisé,
la quantité de carburant injectée par l'injection préliminaire est choisie et, au moyen d'un étranglement de l'air aspiré, la pression dans la chambre de combustion est réduite de telle façon que dans la chambre de combustion se présente tout d'abord un mélange qui n'est pas capable de s'enflammer, le mélange préalablement homogénéisé est soumis à une injection principale dans la chambre de combustion, pour améliorer la capacité d'allumage du mélange présent dans la chambre de combustion, une combustion de ladite au moins une injection préliminaire et de ladite au moins une injection principale a lieu sous excès d'oxygène, et avec établissement d'une composition riche des gaz d'échappement au moyen de ladite au moins une injection postérieure.

2. Procédé pour le fonctionnement d'un moteur à combustion interne, selon la revendication 1,
**caractérisé en ce que** dans le fonctionnement riche, on ne procède à aucun recyclage des gaz d'échappement.

3. Procédé pour le fonctionnement d'un moteur à combustion interne selon la revendication 1,
**caractérisé en ce que** l'on engendre un écoulement tourbillonnaire en entrée, susceptible d'être commandé.

4. Procédé pour le fonctionnement d'un moteur à combustion interne selon l'une des revendications précédentes,
**caractérisé en ce que** l'étranglement de l'air aspiré a lieu au moyen d'au moins un clapet d'étranglement et/ou d'une commande variable des soupapes d'admission.

5. Procédé pour le fonctionnement d'un moteur à combustion interne, selon l'une des revendications précédentes,
**caractérisé en ce qu'**une combustion de ladite au moins une injection préliminaire et de ladite au moins une injection principale a lieu à une valeur de lambda inférieure à 2 et de préférence entre 1,1 et 1,3.

6. Procédé pour le fonctionnement d'un moteur à combustion interne, selon l'une des revendications précédentes,
**caractérisé en ce que** ladite au moins une injection principale est introduite dans la chambre de combustion dans la zone du point mort haut.

7. Procédé pour le fonctionnement d'un moteur à combustion interne selon l'une des revendications précédentes,
**caractérisé en ce que** l'injection préliminaire est introduite encore avant le point mort haut dans la chambre de combustion.

8. Moteur à combustion interne avec installation de purification des gaz d'échappement pour mettre en oeuvre le procédé selon l'une des revendications précédentes, comprenant une installation d'injection avec des moyens pour introduire une quantité de carburant par au moins une injection préliminaire, au moins une injection principale et au moins une injection postérieure, dans lequel un instant d'injection et la quantité injectée sont réglables au moyen d'un appareil de commande à l'intérieur de limites prédéfinies, et dans lequel des moyens sont prévus pour l'homogénéisation préalable de la quantité de carburant introduite au moyen dudit au moins un dispositif d'injection préliminaire, et des moyens pour étrangler l'air aspiré.
